# EUROPEAN PATENT SPECIFICATION

(11) **EP 2 045 131 B1**
(45) Date of publication and mention of the grant of the patent: **04.09.2013**
(21) Application number: 08165633.2
(22) Date of filing: 01.10.2008
(51) Int. Cl.: B60Q 3/00, B60Q 3/02

(54) **Interior lamp**
Innenlampe
Lampe d'intérieur

(30) Priority: 02.10.2007 JP 2007259247
(43) Date of publication of application: 08.04.2009
(73) Proprietor: Toyota Boshoku Kabushiki Kaisha, Kariya-shi, Aichi-ken 448-8651 (JP)
(72) Inventor: Omura, Naomi, Kariya-shi Aichi 448-8651 (JP); Yaoichi, Shinichi, Kariya-shi Aichi 448-8651 (JP); Kojima, Natsuki, Kariya-shi Aichi 448-8651 (JP); Kakumu, Michinori, Toyota-shi Aichi 471-8571 (JP); Tanaka, Shinji, Ikeda-shi Osaka 563-8651 (JP)
(74) Representative: TBK

(56) References cited:
- WO-A-2006/137018
- DE-A1- 2 507 857
- US-A- 4 659 889
- US-A- 5 951 155
- US-A1- 2005 087 702
- US-A1- 2005 174 791
- US-A1- 2008 112 155

## Description

### Field of the Invention

The present invention relates to an interior lamp suited for mounting in a ceiling of an interior of an automobile or the like. More specifically, the present invention relates to an interior lamp capable of achieving a heretofore unknown aesthetic design and whose switch can be easily found by touch and operated.

### Description of the Related Art

US 2005/0174791 A1 discloses an interior lamp comprising a housing, a tiltable illuminating part and a switch responsive to the movement of the lens.

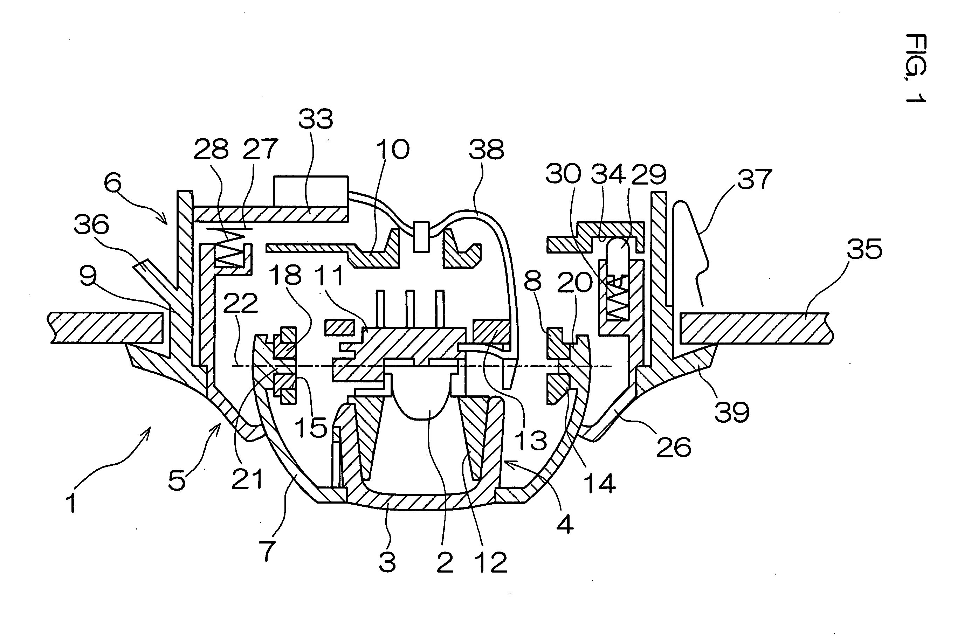

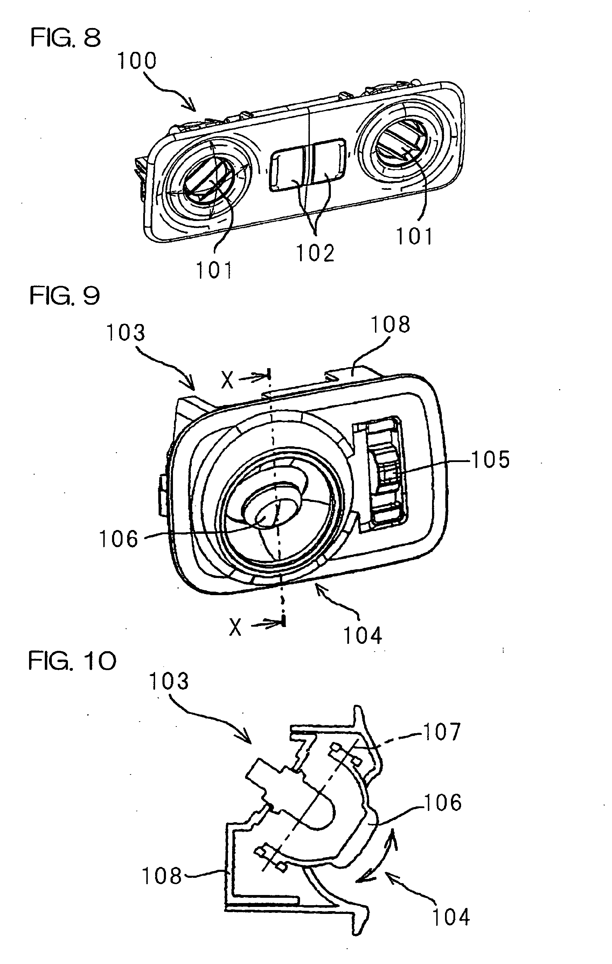

Related art for an interior lamp mounted in the ceiling of a roofed vehicle such as an automobile is known in which rotation of a light source portion can change a direction of illumination. An example of this type of interior lamp is shown in FIG. 8, where an interior lamp 100 is provided with a circular light source portion 101 and a push type switch 102 laterally disposed therefrom (see Patent Document 1). Regarding the interior lamp 100, an outer side surface of a bezel supporting a lens is a spherical surface, and the outer side surface is slidably supported with respect to a body (see FIG. 1 of Patent Document 1). Accordingly, the illumination direction of the light source portion 101 can be freely changed, and the interior lamp 100 can be used provided in proximity to a rearview mirror normally disposed forward of a front seat or above a side window, for example.
An example of this type of interior lamp is shown in FIG. 9, where the interior lamp 103 is integrally provided with a circular light source portion 104 and a slide type switch 105 laterally disposed therefrom. In the interior lamp 103, as FIG. 10 illustrates, a lens 106 is rotatably supported with respect to a body 108 by two mutually perpendicular rotational shafts 107 (only one is shown in the figure) that are provided on an outer side surface of the lens 106. Accordingly, the illumination direction of an illuminating part, i.e., the lens 106, can be freely changed.

[Patent Document 1] Japanese Patent Application Publication No. JP-A-2005-125870

The interior lamps 100, 103 according to related art adopt the push type switch 102 and the slide type switch 105, respectively, which are disposed adjacent to the light source portions 101, 104. An overall shape thereof is consequently quadrangular, placing restrictions on the design and also making downsizing difficult.
In addition, there are cases when the switches 102, 105 are operated by touch alone because of poor visibility due to darkness or because of a desire to operate the switch without looking at the interior lamp. However, the positions of the switches 102, 105 are hard to understand. It is difficult to sense where the switches 102, 105 are with respect to the light source portions 101, 104. Thus when feeling around to operate the switches, after finding the light source portions 101, 104 one must still grope further for the switches 102, 105. Moreover, one may accidentally touch the switch 105 when attempting to change the orientation of the light source portion 104, which could result in a different lighting condition.

### SUMMARY OF THE INVENTION

In view of the foregoing situation, it is an object of the present invention to provide an interior lamp with a heretofore unknown aesthetic design and whose switch can be easily found by touch and operated.

The present invention is defined in claim 1 and preferred embodiments in claims 2 to 5.

According to the interior lamp of the present invention, the ring type switch is provided so as to curvingly surround the circular illuminating part. Therefore, with an overall design shaped as a perfect circle or the like, it is possible to achieve a configuration whose aesthetic does not change regardless of a viewing direction. Furthermore, increased design flexibility and a more superior design can also be achieved. Compared to cases where a slide type switch, a push type switch or the like is adopted as in related art, it is not necessary to prepare a set space for the switch in the vicinity of the illuminating part. Therefore, downsizing is possible and a design completely different from related art can be achieved. Moreover, the ring type switch is disposed around a periphery of the illuminating part. Consequently, after feeling for and finding the illuminating part, the switch positioned therearound can be easily found and operated. Therefore, better operability can be achieved.
In addition, there is no need to provide a location for the switch on a portion of the interior lamp. Therefore, the illuminating part can easily be made larger to enable illumination with a high light intensity.

If the illuminating part is supported by two rotational shafts with respect to the housing, then an illumination direction can be arbitrarily changed. At times when an orientation of the illuminating part is changed, erroneous operation does not occur because even if the switch is accidentally touched, there is no change in a lighting mode due to movement of the switch.
In addition, by supporting the illuminating part using two rotational shafts, a wide angle of mobility can be achieved, and changing the orientation enables illumination of the entire interior. The illuminating part capable of moving and changing the illumination direction includes the light source that rotates in concert. Therefore, even if the orientation of the illuminating part is changed, there is no change in an optical system of an optical axis or the like, and a uniform illumination capability can be obtained. In particular, a light source with high directionality such as an LED is preferable and can be used with no problems.
Since the illumination direction can be changed and illumination of a high light intensity can be achieved in this manner, a single lamp can be used for various applications rather than used only as an auxiliary light source, such as a map lamp, a vanity lamp, a trunk lamp, or a spot lamp. Instead, a single lamp can be used for overall illumination, such as a room lamp capable of illuminating an entire floor surface in an interior.
If the light source is an LED, then higher spot performance and greater downsizing can be achieved, compared to when a bulb is used. Furthermore, there is little restriction on a rotational angle of the illuminating part due to downsizing of the light source. Consequently, an illumination range can be expanded.
If the housing is shaped as a circle, then a design can be obtained in which the illuminating part, the ring type switch, and the housing have similar circular shapes. Furthermore, an improved design different from conventional rectangular interior lamps can also be achieved.
If the illuminating part, the switch, and the housing are disposed in a configuration of concentric circles, then a sense of uniformity can be achieved among the respective elements. Therefore, an improved design different from conventional rectangular interior lamps can also be achieved.

### BRIEF DESCRIPTION OF THE DRAWINGS

FIG. 1 is a vertical cross-sectional view showing a state in which an interior lamp according to an embodiment is sectioned along a first rotational shaft;
FIG. 2 is a vertical cross-sectional view showing a state in which the interior lamp according to the embodiment is sectioned along a second rotational shaft;
FIG. 3 is an exploded assembly drawing of the interior lamp;
FIG. 4 is a perspective view showing the second rotational shaft;
FIG. 5 is a vertical cross-sectional view showing a state in which an illuminating part is rotated a maximum extent;
FIG. 6 is a vertical cross-sectional view showing a state during an operation to mount the interior lamp to a ceiling;
FIGS. 7A to 7C are perspective views showing rotation patterns of the illuminating part, where FIG. 7A shows the illuminating part at a neutral position, FIG. 7B shows the illuminating part rotated around the first rotational shaft, and FIG. 7C shows the illuminating part rotated around the second rotational shaft;
FIG. 8 is a perspective view showing an interior lamp according to related art;
FIG. 9 is a perspective view showing another interior lamp according to related art; and
FIG. 10 is a cross-sectional view showing a state sectioned along a line X-X in FIG. 9.

### DESCRIPTION OF REFERENCE NUMERALS

1; interior lamp,
2; light source,
3; lens,
4; illuminating part,
5; ring type switch,
6; housing,
7; lens holder,
8; support ring,
9; outer bezel,
10; outer plate,
26; switch knob.

### DETAILED DESCRIPTION OF THE PREFERRED EMBODIMENT

An interior lamp according to the present invention is characterised by including an illuminating part that is provided with a light source; a switch that performs selection of a lighting control for the light source; and a housing that supports the illuminating part and the switch.
The above-mentioned "illuminating part" is not particularly limited in terms of size, quantity or the like. Furthermore, the illuminating part is supported by two rotational shafts on the housing and an illumination direction thereof can be changed. The two rotational shafts are ordinarily disposed so as to be at right angles to one another. However the two rotational shafts are not restricted to this arrangement, and an angle formed by the two rotational shafts is not particularly limited. In addition, the illuminating part is provided with a light source, and an orientation of the light source simultaneously changes with a change in an orientation of the illuminating part.
An exposed portion of the illuminating part may have a shape selected at will, but a rim shape of the exposed portion is preferably a perfect circle. This is for matching a shape of the switch and the like, as well as to secure a superior aesthetic and ensure that there is no interference when changing the orientation of the illuminating part.
The above-mentioned "light source" is not particularly limited in terms of type, shape, size, quantity and the like, provided that the light source electrically emits light. The light source may be an LED, for example.
Also, the illuminating part and/or the light source may be provided with a lens for adjusting light flux emitted from the light source. The lens is not limited in terms of size, material, shape and the like, provided that the lens is capable of diffusing light from the light source in a range depending on the application.

The above-mentioned "switch" is not particularly limited in terms of shape, size and the like, provided that the switch is a ring type switch rotatable around a periphery of the illuminating part and provided so as to surround the illuminating part, with an exposed operation portion thereof having a ring-like shape. The switch can also be used to select a lighting control for the light source. The selection of a lighting control can be performed at will. For example, three modes may be selected consisting of regular lighting and non-lighting of the interior lamp, and lighting associated with the opening and closing of a door, or two modes may be selected consisting of lighting and non-lighting of the interior lamp. The switch can also be used to select a brightness, a flashing mode and the like of the interior lamp.
The ring type switch is also not particularly limited in terms of a range of mobility. For example, the mobility range may be restricted or the mobility range may not be restricted and allow movement at an arbitrary angle.

The above-mentioned "housing" is not particularly limited in terms of shape, size and the like, provided that the housing supports the illuminating part and the switch. The housing may be made, for example, from materials such as synthetic resin, metal and the like. Also, an arbitrary flat shape may be selected for the housing, including examples such as a perfect circle shape, a regular polygon shape (e.g. from a regular triangle to a regular dodecagon or the like), and an oval shape. Among these examples, the perfect circle shape is particularly preferable. This is due to the fact that a design significantly different from an interior lamp according to related art can be obtained.

It is further preferable that the housing, the switch, and the illuminating part are disposed in a configuration of concentric circles. When feeling around to operate the switch, such a configuration facilitates understanding of the position of the switch based on the position of the illuminating part. In addition, the illuminating part, the switch, and the housing are preferably arranged so as to be exposed in the order of, starting from a center side, the illuminating part, the switch, and the housing. This is in order to obtain a design significantly different from an interior lamp according to related art, wherein the position of the switch is easily understood based on the position of the illuminating part and the switch is provided along a periphery of the illuminating part.

### Embodiment

Hereinafter, a specific description of the present invention will be given based on an embodiment with reference to the accompanying drawings. An interior lamp according to the present embodiment is a lamp used as an interior light of a passenger vehicle.

### (1) Structure of the Interior Lamp

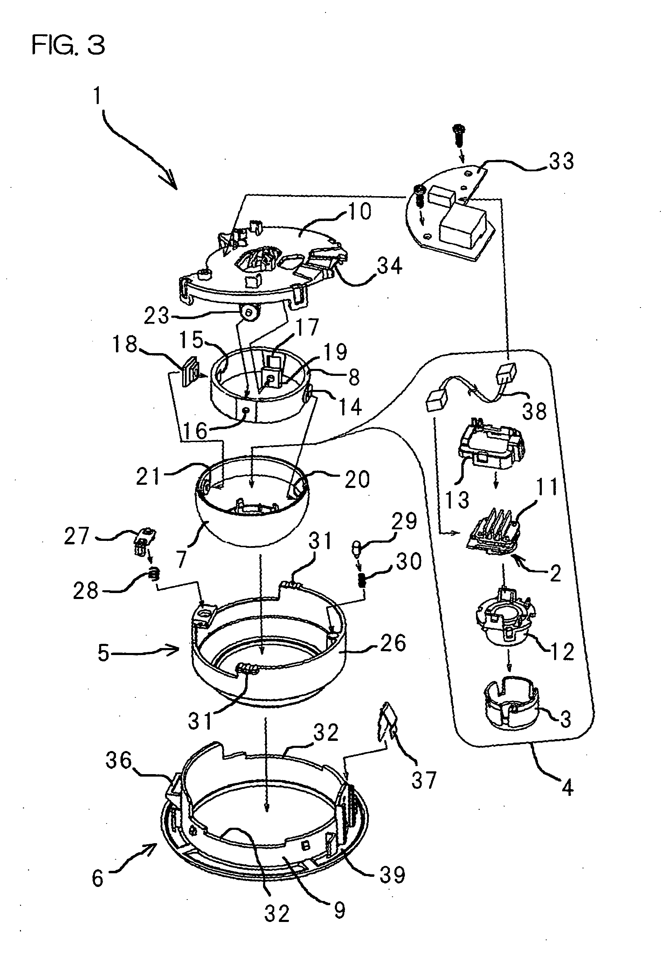

As FIGS. 1 to 3 illustrate, an interior lamp 1 according to the present embodiment includes an illuminating part 4 provided with a light source 2 and a lens 3; a ring type switch 5 that performs an on-off control of the light source 2; a lens holder 7 that supports the illuminating part 4; a support ring 8 that supports the lens holder 7; and a housing 6 that supports the support ring 8 and the ring type switch 5. In addition, an inner edge of the ring type switch 5 and a surface of the lens holder 7 are positioned so as to be in the vicinity of one another and/or in mutual contact. The housing 6, the ring type switch 5, the lens holder 7, and the illuminating part 4 are formed in a configuration of concentric circles.
The housing 6 is circular and made of synthetic resin, and also includes an outer bezel 9 exposed to an interior side, as well as an outer plate 10 resembling a cover attached to a back side thereof. Other parts are accommodated within the outer bezel 9 and the outer plate 10.
The illuminating part 4 includes an LED unit 11 equipped with an LED serving as the light source 2; an LED holder 12 that prevents the diffusion of light rays from the light source 2; the lens 3, and an LED hold plate 13 integrated with these. The illuminating part 4 is fixed to the lens holder 7.

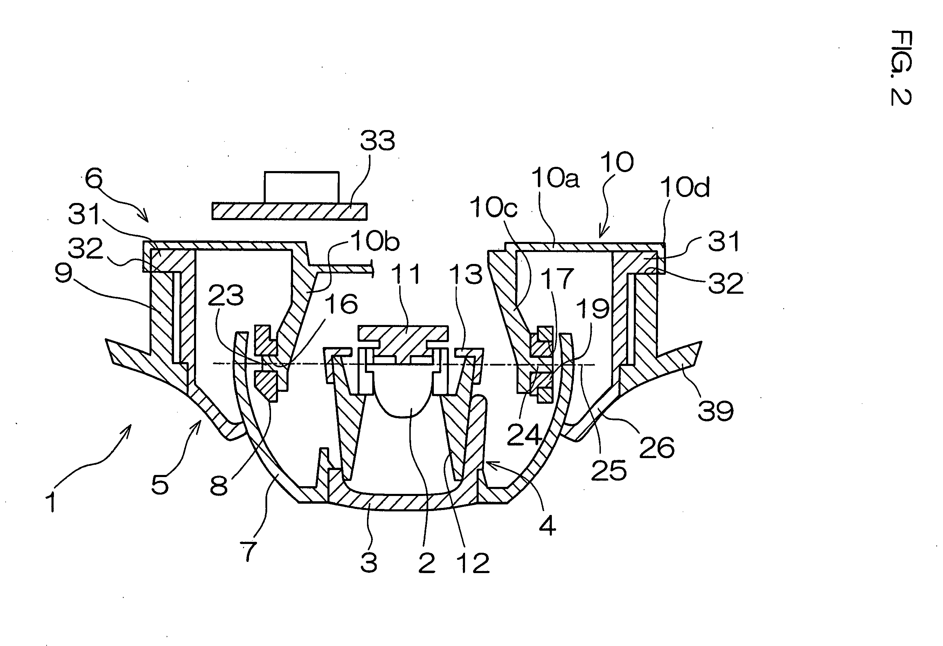

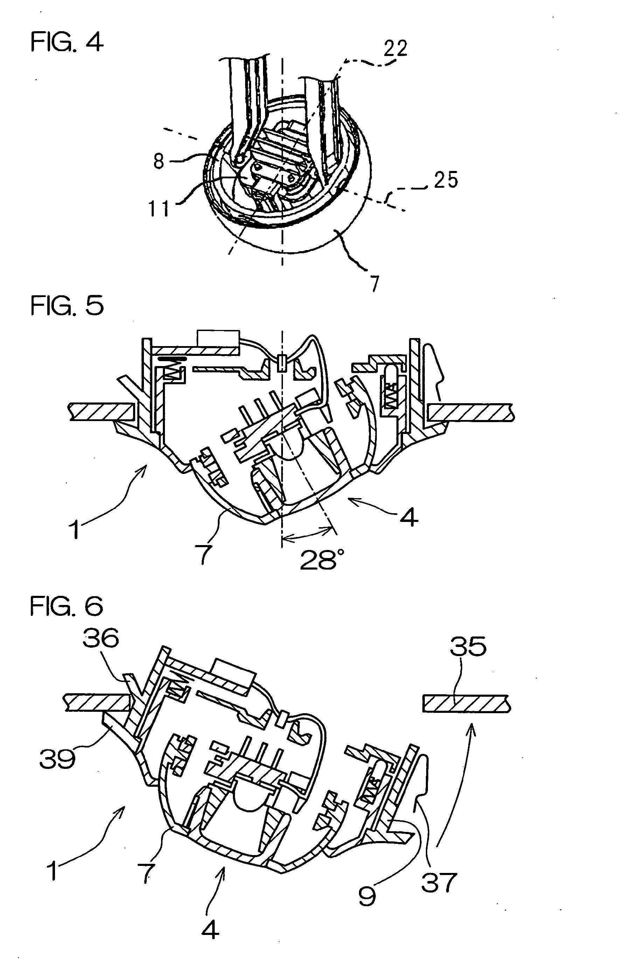

An inner side of the lens holder 7 is provided with the support ring 8, which has a toric shape. The support ring 8 includes a first rotational shaft end 14 that projects to an outer peripheral side; a first shim-receiving hole 15 formed on a side opposite of the first rotational shaft end 14; a second bearing 16 formed at a position displaced 90 degrees from the first rotational shaft end 14; and a second shim-receiving hole 17 formed on a side opposite of the second bearing 16. A first shim 18 and a second shim 19 are rotatably provided in the first shim-receiving hole 15 and the second shim-receiving hole 17, respectively. The shims 18 and 19 are made of elastomers.
The inner side of the lens holder 7 is formed with a first bearing 20 that receives the first rotational shaft end 14 of the support ring 8 and also formed with a first shim receiver 21 that holds the first shim 18. Furthermore, the first bearing 20 is combined with the first rotational shaft end 14, and the first shim receiver 21 is combined with the first shim 18 provided in the first shim-receiving hole 15, so as to structure a first rotational shaft 22. Accordingly, the lens holder 7 is supported by the support ring 8 so as to enable rotation and holding at an arbitrary angle (see FIG. 1) .
The outer plate 10 is formed from a bottom portion 10a that is a circular disc body whose center is provided with a hole; two support columns 10b and 10c that are provided standing along a periphery of the hole of the bottom portion 10a so as to face one another; and an outer peripheral portion 10d that serves as an outer peripheral portion of the bottom portion 10a and is connected with an end portion of the outer bezel 9. An end side of the support column 10b is formed with a second rotational shaft end 23 that is received by the second bearing 16 of the support ring 8. Meanwhile, an end side of the support column 10c is formed with a second shim receiver 24 that holds the second shim 19. Furthermore, the second bearing 16 is combined with the second rotational shaft end 23, and the second shim receiver 24 is combined with the second shim 19 provided in the second shim-receiving hole 17, so as to structure a second rotational shaft 25. Accordingly, the support ring 8 is supported by the outer plate 10 so as to enable rotation and holding at an arbitrary angle (see FIG. 2).
Here, the first rotational shaft 22 that connects the lens holder 7 and the support ring 8 forms a 90-degree angle with the second rotational shaft 25 that connects the support ring 8 and the outer plate 10 (see FIG. 4). Additionally, a maximum rotational angle of the rotational shafts is 56 degrees (see FIG. 5).

An outer side of the lens holder 7 is provided with the ring type switch 5. The ring type switch 5 includes a toric switch knob 26; a metal switch plate 27 that serves as a switch contact; a switch spring 28 that biases the switch plate 27; and a pin 29 and a pin spring 30 for achieving a feeling of detent during rotation of the switch. A peripheral edge of the switch knob 26 has a pair of flanges 31 that are provided at even intervals, that is, at positions that equally divide the switch knob 26. The flange 31 serves as a rotational shaft of the switch knob 26, wherein the flange 31 is accommodated in a guide hole 32 formed by the outer bezel 9 and the outer plate 10, and guided to within a predetermined rotational angle.
The switch plate 27 contacts a contact pattern of a substrate 33 mounted on the outer plate 10. The pin 29 is movably set in three concave portions 34 formed in the outer plate 10. By rotating the switch knob 26, the pin 29 biased toward the concave portion 34 by the pin spring 30 moves from one concave portion 34 to another concave portion 34. Accordingly, it is possible to achieve a sensation of the state of the switch changing. At the same time, the switch plate 27 moves with respect to the substrate 33, which changes a state of connection with the contact pattern. In the present embodiment, the three modes of regular lighting and non-lighting of the lamp and lighting associated with the opening and closing of a door can be selected.
The outer bezel 9 includes a flange 39 exposed to an interior side, as well as a tab 36 and an engagement spring 37 that catch on a back side of a ceiling 35. The engagement spring 37 and the tab 36 are disposed on opposite sides, and are structured such that the engagement spring 37 elastically deforms during mounting of the interior lamp 1 to the ceiling 35 to allow mounting. After mounting, the engagement spring 37 and the tab 36 prevent detachment by catching on a back surface of the ceiling 35. The outer plate 10 is attached with the substrate 33. The substrate 33 and the LED unit 11 are connected via a wire harness 38.

One interior lamp 1 is provided at a position around a rearview mirror, which is also the ceiling 35 above a front seat of a passenger vehicle. Thus, it is possible to illuminate a wide area ranging from the hands of a passenger in the front seat to a luggage space behind a rear seat.

### (2) Operation of the Interior Lamp

The assembly sequence of the interior lamp 1 with the above-described structure will be explained next.
First, to assemble the illuminating part 4, the LED holder 12 is mounted to the lens 3 and then the LED unit 11 is placed thereupon, followed by the LED hold plate 13. The LED unit 11 is connected with the wire harness 38. The illuminating part 4 is then mounted to the lens holder 7. Next, the support ring 8 attached with the two shims 18 and 19 is mounted to the inner side of the lens holder 7. At such time, the first rotational shaft end 14 is supported by the first bearing 20, and the first shim 18 is simultaneously supported by the first shim-receiving hole 15. The support ring 8 is further mounted to the outer plate 10. At such time, the second rotational shaft end 23 of the outer plate 10 is supported by the second bearing 16, and the second shim 19 is simultaneously supported by the second shim receiver 24.
Meanwhile, an inner side of the outer bezel 9 is mounted with the switch knob 26. At such time, the flanges 31 of the switch knob 26 enter the guide hole 32 of the outer bezel 9. The switch plate 27 and the switch spring 28 are subsequently mounted, and the pin 29 and the pin spring 30 are also mounted.
Next, the outer plate 10 assembled with the illuminating part 4, the lens holder 7, and the support ring 8 is attached to the outer bezel 9. An outer side of the outer plate 10 is further screwed with the substrate 33 and the wire harness 38 is connected with the substitute 33.
When attaching the interior lamp 1 to the ceiling 35, as FIG. 6 shows, the tab 36 of the outer bezel 9 diagonally catches on an edge of a mounting hole of the ceiling 35. The opposite side is then lifted up, after which the engagement spring 37 elastically deforms and presses into the back of the ceiling 35. Thus, detachment is prevented by the tab 36 and the engagement spring 37 catching on the back of the ceiling 35.

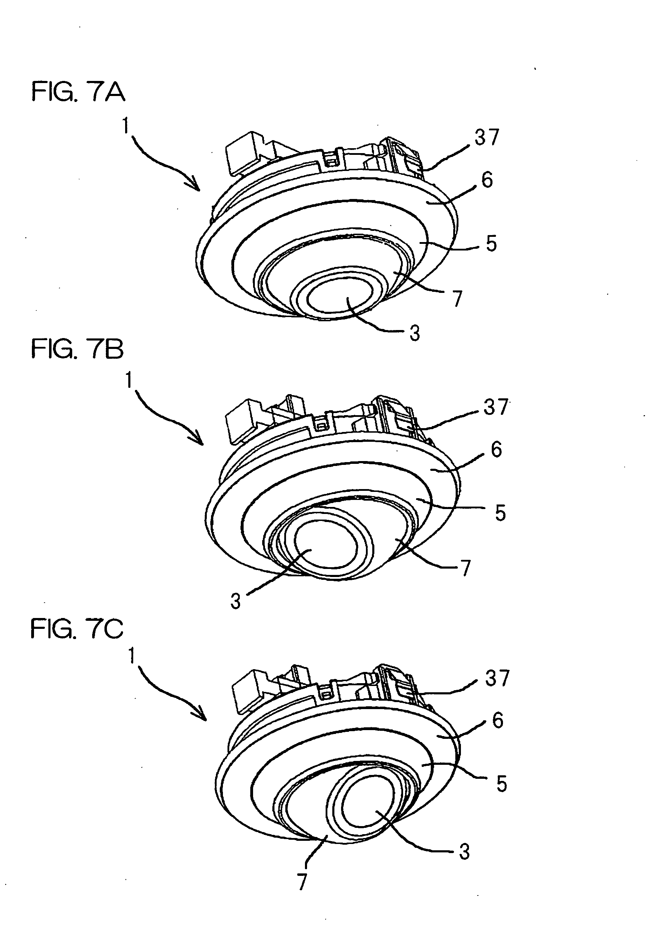

The operation of the interior lamp 1 with the above-described structure will be explained next.
When a user grasps and rotates the switch knob 26, the switch plate 27 moves and switches between on and off states of the light source 2. Furthermore, when the user grasps the lens holder 7 of the illuminating part 4 for the application of external force to change an optical axis, as FIG. 7 shows, the lens holder 7 is suitably rotated with respect to the outer plate 10 via the two rotational shafts 22 and 25 of the support ring 8. Accordingly, an arbitrary position within a range of mobility can be illuminated. Here, the rotational shafts 22 and 25 use the shims 18 and 19, and therefore it is possible to maintain an arbitrary angle as set.

### (3) Effects of the Embodiment

According to the interior lamp 1 of the present embodiment, a switch is provided that has a ring-shaped switch knob 26 rotatably provided so as to surround the illuminating part 4. Therefore, the aesthetic does not change regardless of the viewing direction and a superior design is achieved. Compared to cases where a slide type switch, a push type switch or the like is adopted as in related art, it is not necessary to prepare a suitable space for the switch in the vicinity of the illuminating part 4. Therefore, downsizing is possible and a design completely different from related art can be achieved. In addition, after feeling for and finding the illuminating part 4, the switch knob 26 positioned therearound can be easily found and operated. Therefore, better operability can be achieved.
Additionally, the inner side of the lens holder 7 is provided with the two rotational shafts 22 and 25, whereby the mobility range of the illuminating part 4 can be widely set. More specifically, according to the present embodiment, it is possible to set a wide mobility range of 56 degrees, for example, whereas the mobility range of the illuminating part 4 in the interior lamp 103 according to related art shown in FIGS. 9 and 10 remains approximately 24 degrees. Thus according to the present embodiment, providing just one interior lamp 1 at a position around the rearview mirror, which is also the ceiling 35 above the front seat of the passenger vehicle makes it possible to include the entire interior in an illumination range. As a consequence, compared to cases in the past where in addition to a lamp disposed in the center of the ceiling, a plurality of interior lamps including a vanity lamp and a trunk lamp is also provided, the number of lamps can be considerably reduced and one lamp can be used for various applications.
Furthermore in the present embodiment, the housing 6, the switch knob 26, the lens holder 7, and the lens 3 are formed in a configuration of concentric circles. Therefore, a superior design and downsizing can be simultaneously achieved. In the present embodiment, the light source 2 is an LED and can achieve higher spot performance and greater downsizing, compared to when a bulb is used. Additionally, since the light source 2 can be made small, it is possible to provide the light source 2 within the illuminating part 4.
An interior lamp can thus be obtained whose light intensity does not change regardless of the orientation of the illuminating part 4.

It should be noted that the present invention is not limited to the embodiment described above, and various modifications depending on the purpose and application are possible that fall within the scope of the present invention. Namely, although in the above embodiment the housing 6 is circular, the present invention is not limited to this and a polygonal shape such as a quadrangle may also be used, for example. Accordingly, more design flexibility can be achieved.
Furthermore, in the above embodiment, an LED is used as the light source 2. However, the present invention is not limited to this and a bulb may also be used, for example. According to the above embodiment, the two rotational shafts 22 and 25 are provided on the inner side of the lens holder 7. However, the present invention is not limited to this, and two rotational shaft may be provided on an outer side of the lens holder 7, for example.
Moreover, in the above embodiment, the illuminating part 4 includes the light source 2 and the lens 3. However, the present invention is not limited to this, and for example, the illuminating part 4 may include only the light source 2 and not have the lens 3, or the illuminating part 4 may include only the lens 3 with the light source 2 fixed to the housing 6.
Furthermore, in the above embodiment, the ring type switch 5 rotates only within a predetermined range of mobility. However, the present invention is not limited to this and the ring type switch 5 may be rotatable around an entire circumference, for example. According to the above embodiment, the ring type switch 5 switches among the three modes of turning the illumination on and off and linking the illumination to the opening and closing of a door. However, the present invention is not limited to this, and the ring type switch 5 may switch between turning the illumination on and off only.
Moreover, in the above embodiment, the interior lamp 1 is disposed at only one location in the ceiling 35 of a passenger vehicle. However, the present invention is not limited to this and the interior lamp 1 may be disposed at a plurality of locations, for example.

The present invention is utilized as an interior lamp of an automobile. More specifically, the present invention is well suited for use as a compact interior lamp with a superior design.
The present invention provides an interior lamp with a heretofore unknown aesthetic design, whose switch can be easily found by touch and operated, and which is capable of changing an illumination direction to an arbitrary direction and also capable of illuminating an entire floor surface in an interior with one lamp. The interior lamp 1 includes an illuminating part 4 provided with a light source 2; a switch 5 performing selection of a lighting control for the light source; and a housing 6 supporting the illuminating part and the switch, wherein the illuminating part is circular, and the switch is ring-like and provided so as to surround the illuminating part, and can be operated by rotation around a periphery of the illuminating part. With such an interior lamp, even if the switch is accidentally touched, there is no change in a lighting mode due to movement of the switch.

## Claims

1. An interior lamp (1) comprising:
an illuminating part (4) that is provided with a light source (2);
a lens holder (7) that supports said illuminating part (4),
a switch (5) that performs selection of a lighting control for said light source (2); and
a housing (6) that supports said lens holder (7), wherein
said lens holder (7) is supported by two rotational shafts (22, 25) with respect to said housing (6),
said illuminating part (4) is circular, **characterized in that** said switch (5) is supported by said housing (6),
said switch (5) is ring-like and can be operated by rotation around a periphery of said lens holder (7), and
said switch (5) is provided so as to surround said lens holder (7), wherein the lens holder (7), the switch (5) and the housing (6) are disposed in a configuration of concentric circles and are arranged to be exposed in the order of, starting from a center side, the lens holder (7), the switch (5) and the housing (8).

2. An interior lamp (1) according to claim 1, wherein
the housing (6) includes an outer bezel (9) adapted to be exposed to an interior side of a vehicle and an outer plate (10) resembling a cover attached to the back side of the outer bezel (9), and
the switch (5) comprises a switch knob (26) and a pair of flanges (31) accommodated in a guide hole (32) formed by the outer bezel (9) and the outer plate (10).

3. An interior lamp (1) according to claim 1 or 2, wherein said light source (2) is an LED.

4. The interior lamp (1) according to claim 1, 2 or 3, wherein a flat shape of said housing (6) is shaped as a perfect circle.

5. The interior lamp (1) according to claim 4, wherein said illuminating part (4), said lens holder (7), said switch (5), and said housing (6) are disposed in a configuration of concentric circles, with said illuminating part (4) on an inner side and said housing (6) on an outer side.

## Patentansprüche

1. Innenleuchte (1) mit:
einem Beleuchtungsteil (4), das mit einer Lichtquelle (2) versehen ist;
einem Linsenhalter (7), der das Beleuchtungsteil (4) stützt,
einem Schalter (5), der die Auswahl einer Leuchtsteuerung der Lichtquelle (2) durchführt; und
einem Gehäuse (6), das den Linsenhalter (7) stützt, wobei
der Linsenhalter (7) mit Bezug auf das Gehäuse (6) durch zwei Rotationswellen (22, 25) gestützt ist,
der Beleuchtungsteil (4) kreisförmig ist, **dadurch gekennzeichnet, dass**
der Schalter (5) durch das Gehäuse (6) gestützt ist,
der Schalter (5) ringartig ist und durch Drehen um einen Umfang des Linsenhalters (7) betätigt werden kann, und
der Schalter (5) so vorgesehen ist, dass er den Linsenhalter (7) umgibt, wobei der Linsenhalter (7), der Schalter (5) und das Gehäuse (6) in einer Konfiguration konzentrischer Kreise angeordnet sind und so angeordnet sind, dass sie beginnend von einer zentralen Seite in der Reihenfolge des Linsenhalters (7), des Schalters (5) und des Gehäuses (8) freiliegen.

2. Innenleuchte (1) gemäß Anspruch 1, wobei
das Gehäuse (6) eine Außeneinfassung (9) hat, die dazu angepasst ist, zu einer Innenseite eines Fahrzeugs freizuliegen, und eine Außenplatte (10) hat, die einer an der Rückseite der Außeneinfassung (9) angebrachten Abdeckung ähnelt, und
der Schalter (5) einen Schaltknopf (26) und ein Paar Flansche (31) aufweist, die in einem Führungsloch (32) untergebracht sind, das durch die Außeneinfassung (9) und die Außenplatte (10) gebildet ist.

3. Innenleuchte (1) gemäß Anspruch 1 oder 2, wobei die Lichtquelle (2) eine LED ist.

4. Innenleuchte (1) gemäß Anspruch 1, 2 oder 3, wobei eine ebene Form des Gehäuses (6) als ein idealer Kreis geformt ist.

5. Innenleuchte (1) gemäß Anspruch 4, wobei das Beleuchtungsteil (4), der Linsenhalter (7), der Schalter (5) und das Gehäuse (6) in einer Konfiguration konzentrischer Kreise mit dem Beleuchtungsteil (4) an einer Innenseite und dem Gehäuse (6) an einer Außenseite angeordnet sind.

## Revendications

1. Lampe intérieure (1) comprenant :
une partie d'éclairage (4) qui est pourvue d'une source de lumière (2) ;
un porte-objectif (7) qui supporte ladite partie d'éclairage (4),
un commutateur (5) qui effectue la sélection d'une commande d'éclairage pour ladite source de lumière (2) ; et
un boîtier (6) qui supporte ledit porte-objectif (7), où
ledit porte-objectif (7) est supporté par deux arbres rotatifs (22, 25) par rapport audit boîtier (6),
ladite partie d'éclairage (4) est circulaire, **caractérisée en ce que**
ledit commutateur (5) est supporté par ledit boîtier (6),
ledit commutateur (5) est en forme d'anneau et peut être actionné par une rotation autour d'une périphérie dudit porte-objectif (7), et
ledit commutateur (5) est prévu de manière à entourer ledit porte-objectif (7), où le porte-objectif (7), le commutateur (5) et le boîtier (6) sont disposés selon une configuration de cercles concentriques et sont agencés pour être exposés dans l'ordre, en partant d'un côté central, le porte-objectif (7), le commutateur (5) et le boîtier (8).

2. Lampe intérieure (1) selon la revendication 1, dans laquelle
le boîtier (6) comporte une lunette extérieure (9) adaptée pour être exposée à un côté intérieur d'un véhicule et une plaque extérieure (10) ressemblant à un couvercle fixé au côté arrière de la lunette extérieure (9), et
le commutateur (5) comprend un bouton de commutateur (26) et une paire de brides (31) reçues dans un trou de guidage (32) formé par la lunette extérieure (9) et la plaque extérieure (10).

3. Lampe intérieure (1) selon la revendication 1 ou 2, dans laquelle ladite source de lumière (2) est une diode électroluminescente.

4. Lampe intérieure (1) selon la revendication 1, 2 ou 3, dans laquelle une forme plate dudit boîtier (6) a la forme d'un cercle parfait.

5. Lampe intérieure (1) selon la revendication 4, dans laquelle ladite partie d'éclairage (4), ledit porte-objectif (7), ledit commutateur (5), et ledit boîtier (6) sont disposés selon une configuration de cercles concentriques, avec ladite partie d'éclairage (4) sur un côté intérieur et ledit boîtier (6) sur un côté extérieur.
